# EUROPEAN PATENT SPECIFICATION

(11) **EP 2 639 613 B1**
(45) Date of publication and mention of the grant of the patent: **14.01.2015**
(21) Application number: 12159906.2
(22) Date of filing: 16.03.2012
(51) Int. Cl.: G02B 6/44, G02B 6/38

(54) **Fiber optic management unit and fiber optic distribution device**
Glasfaserverwaltungseinheit und Glasfaserverteilungsvorrichtung
Unité de gestion de fibres optiques et dispositif de distribution de fibres optiques

(43) Date of publication of application: 18.09.2013
(73) Proprietor: CCS Technology, Inc., Wilmington, DE 19803 (US)
(72) Inventor: Ruda, Michal, 93-377 Lodz (PL); Fabrykowski, Grzegorz, 95-010 Strykow (PL); Strunck, Sven, 13156 Berlin (DE)
(74) Representative: Sturm, Christoph

(56) References cited:
- WO-A1-2009/102912
- US-A1- 2007 047 894

## Description

The present patent application relates to a fiber optic management unit. Further on, the present patent application relates to a fiber optic distribution device comprising at least two fiber optic management units.

When designing data transmission networks comprising optical fibers, it is necessary to connect optical fibers to one another. Such junctions need to be handled both outside buildings and inside buildings. Outside buildings, junctions between optical fibers are accommodated in so called cable sleeves or street cabinets. Inside buildings, junctions between optical fiber are handled in so called distribution cabinets or distribution frames. So called wall boxes are used for the handling of junctions between optical fibers both outside buildings and inside buildings.

The present application is based on the problem of providing a novel fiber optic management unit and a novel fiber optic distribution device suitable for handling of junctions between optical fibers both outside buildings and inside buildings. The fiber optic management unit according to the present patent application is defined in claim 1. The fiber optic management unit according to the present patent application comprises a base through which the same is mountable to a housing of the fiber optic distribution device and a tray pivotably attached to the base by a hinge. The base of the novel fiber optic management unit comprises a body. The basic body of the base has a front side and a back side. The front side of the basic body of the base provides different functional areas, namely an overlength handling area, a splice and/or splitter handling area, a patch area and a cable handling area. The tray of the novel fiber optic management unit also comprises a body. The basic body of the tray has a front side and a back side. The back side of the basic body of tray provides a splice protector handling area. The front side of the basic body of tray provides an overlength handling area. The basic body of tray further comprises at least one through opening for guiding optical fibers from the front side to the back side of the basic body of the tray.

WO 2009/102912 A1 and US 2007/047894 A1 disclose fiber optic management units according to the prior art.

Such a fiber optic management unit allows a unique handling of optical fibers. The fiber optic management unit provides a modular and scalable solution for the handling of optical fibers. The novel fiber optic management unit supports functional or labor related separation.

Preferably, the overlength handling area and the splice and/or splitter handling area and the or each patch area of the base are positioned on a first side of the hinge, and the cable handling area is positioned on a second side of the hinge. A first patch area is positioned on a first side of the overlength handling area, and a second patch area is positioned on a second side of the overlength handling area.

According to a preferred further development, the front side of the basic body of the tray further provides a patch area for handling fiber optic adapters and/or fiber optic connectors, wherein the patch area comprises an adapter holder being stacked above the overlength handling area, and wherein the adapter holder of tray is pivotable relative to the basic body of the tray for providing access to the basic body of the tray, namely to the overlength handling area of the same.

The novel fiber optic distribution device is defined in claim 9. The novel fiber optic distribution device comprises a first fiber optic management unit serving as an outdoor unit, wherein overlength of optical fibers running in an outdoor optical cable, overlength of optical fibers running in pigtails and splices between the optical fibers of the outdoor optical cable and the optical fibers of the pigtails are handled within the first fiber optic management unit. Further on, the novel fiber optic distribution device comprises at least one second fiber optic management unit serving as an indoor unit, wherein overlength of optical fibers running in an indoor optical cable, overlength of optical fibers running in pigtails and splitters connected between the pigtails of the outdoor unit and the pigtails of the indoor unit are handled within the or each second fiber optic management unit.

The novel fiber optic distribution device supports functional or labor related separation. In case of different teams working with the system, one part of the system can be dedicated to one team, e.g. to an outdoor team bringing fibers to a building, while another part can be dedicated to another team, e.g. to an indoor team distributing the fibers within the building.

Preferred embodiments of the fiber optic distribution device and fiber optic management unit are given in the dependent claims and the description below. Exemplary embodiments will be explained in more detail with reference to the drawing, in which:
- Figure 1: shows a first perspective view of a fiber optic management unit;
- Figure 2: shows a second perspective view of the fiber optic management unit of Figure 1;
- Figure 3: shows a first perspective view of an alternative fiber optic management unit;
- Figure 4: shows a second perspective view of the fiber optic management unit of Figure 3;
- Figure 5: shows a third perspective view of the fiber optic management unit of Figure 3;
- Figure 6: shows a fourth perspective view of the fiber optic management unit of Figure 3;
- Figure 7: shows a top view of the fiber optic management unit of Figure 3;
- Figure 8: shows a top view of a fiber optic distribution device comprising two fiber optic management units of Figure 1;
- Figure 9: shows another top view of the fiber optic distribution device of Figure 8;
- Figure 10: shows a top view of a fiber optic distribution device comprising three fiber optic management units of Figure 1.

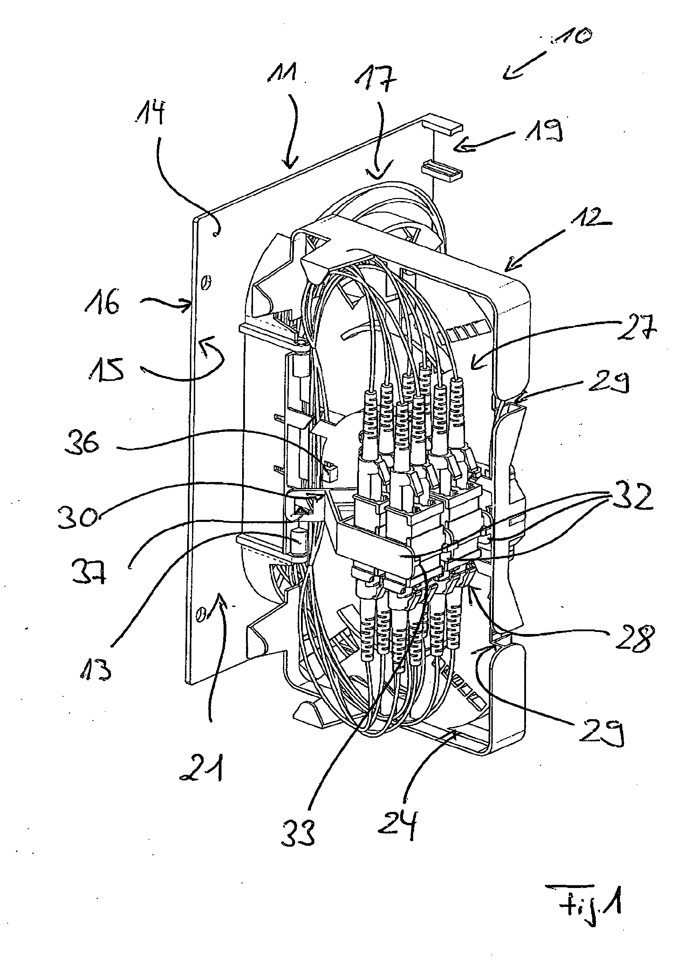

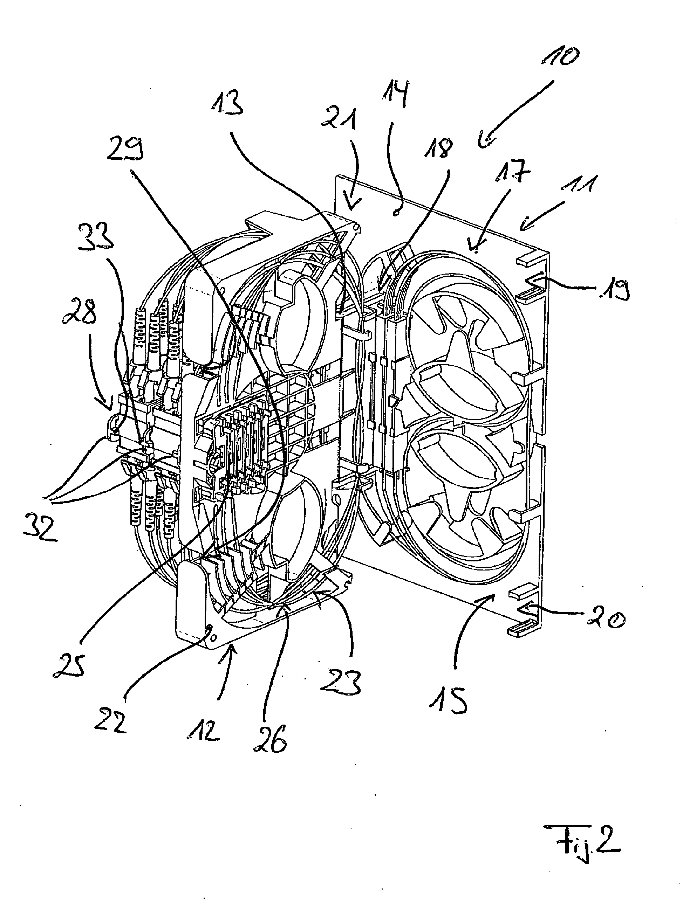

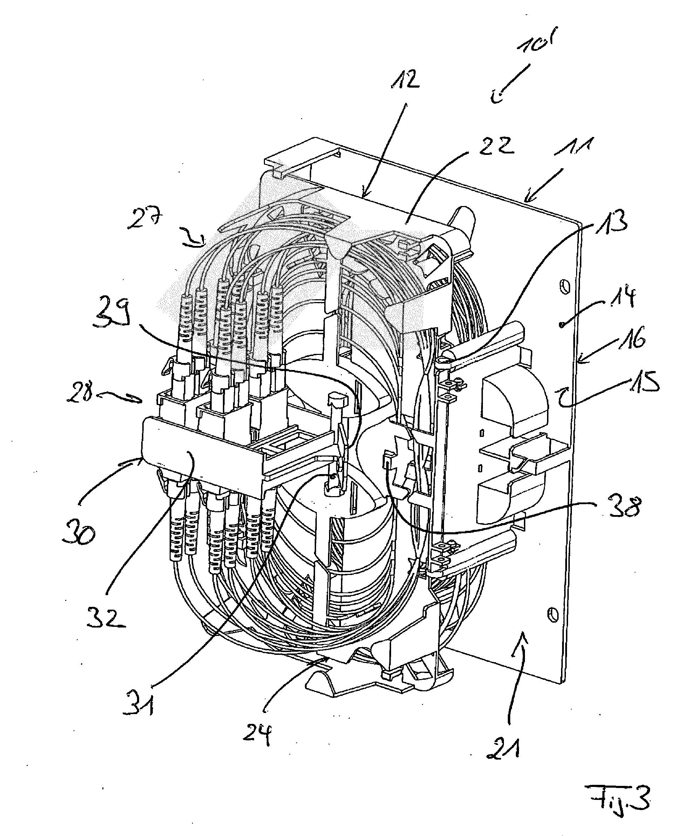

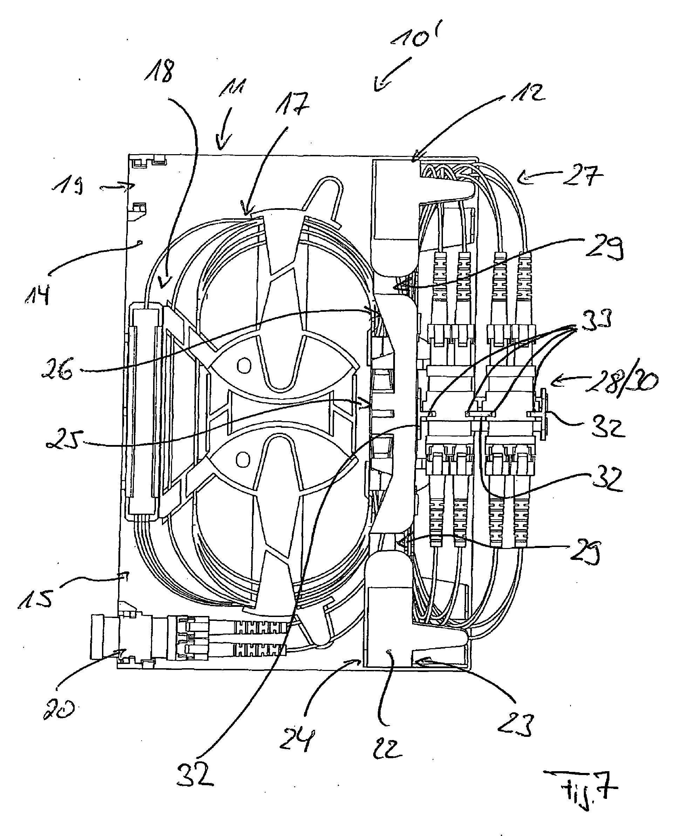

Figure 1 and Figure 2 each show different perspective views of a first embodiment of fiber optic management unit 10. Figure 3 to Figure 7 each show different views of a second embodiment of a fiber optic management unit 10'. For identical elements identical reference signs are used.

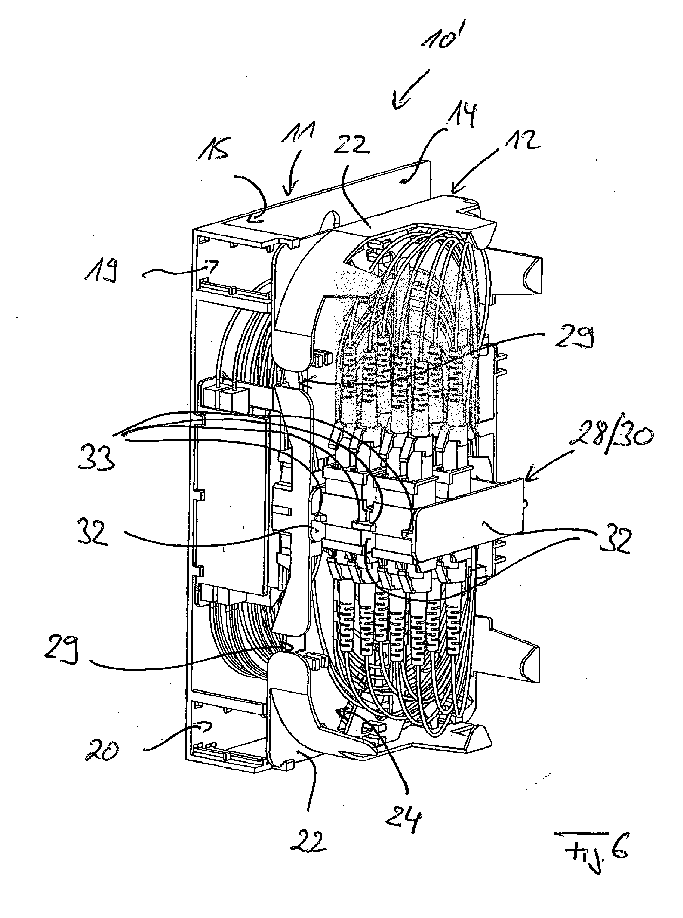

The respective fiber optic management unit 10, 10' comprises a base 11 through which the same is mountable to a housing (not shown) of the fiber optic distribution device. Further on, the respective fiber optic management unit 10, 10' comprises a tray 12 pivotably attached to the base 11 by a hinge 13. The tray 12 can be pivoted relative to the base 11 by approximately 90° around a pivoting axis provided by the hinge 13. The tray 12 can be pivoted relative to the base 11 between an installation position (see Figures 1, 2, 7) and an operation position (see Figures 3, 6). In the installation position of the tray 12, the same allows access to the base 11.

The base 11 of the respective fiber optic management unit 10, 10' comprises a basic body 14. The basic body 14 of the base 11 has a front side 15 and a back side 16. The back side 16 of the basic body 14 of the base 11 contacts a mounting wall (not shown) of a housing of a fiber optic distribution device like a wall box when the fiber optic management unit 10 is mounted in the fiber optic distribution device.

The front side 15 of the basic body 14 of the base 11 provides different functional areas, namely an overlength handling area 17, a splice and/or splitter handling area 18, at least one patch area 19, 20 and a cable handling area 21. The overlength handling area 17 serves for the handling of overlength of optical fibers. The splice and/or splitter handling area 18 serves for the handling of splices and/or splitters. The or each patch area 19, 20 serves for the handling of fiber optic adapters and/or fiber optic connectors. The cable handling area 21 serves for the handling of at least one fiber optic cable.

The overlength handling area 17 and the splice and/or splitter handling area 18 and the or each patch area 19, 20 of the base 11 are positioned on a first side of the hinge 13. The cable handling area 21 is positioned on a second side of the hinge 13.

In the embodiment of Figure 1 and Figure 2, the splice and/or splitter handling area 18 is positioned between the hinge 13 and the overlength handling area 17, wherein a first patch area 19 is positioned on a first side of the overlength handling area 17 and a second patch area 20 is positioned on a second side of the overlength handling area 17.

In the embodiment of Figure 3 to Figure 7, the overlength handling area 17 is positioned between the hinge 13 and the splice and/or splitter handling area 18, wherein a first patch area 19 is positioned on a first side of the overlength handling area 17 and a second patch area 20 is positioned on a second side of the overlength handling area 17.

The tray 12 of the respective fiber optic management unit 10 comprises a basic body 22. The basic body 22 of the tray 12 has a front side 24 and a back side 23. The basic body 22 of the tray 12 has at least one trough opening 29 for guiding optical fibers between the front side 24 and the back side 23 of the basic body 22 of the tray 12.

The back side 23 of the basic body 22 of the tray 12 provides a splice protector handling area 25 and an overlength handling area 26 proximate the splice protector handling area 25. The front side 24 of the basic body 22 of the tray 12 provides at least an overlength handling area 27 and preferably in addition a patch area 28. The splice protector handling area 25 serves for the handling of splice protectors. Each of the overlength handling areas 26, 27 serves for the handling of overlength of optical fibers. The patch area 28 serves for the handling of fiber optic adapters and/or fiber optic connectors.

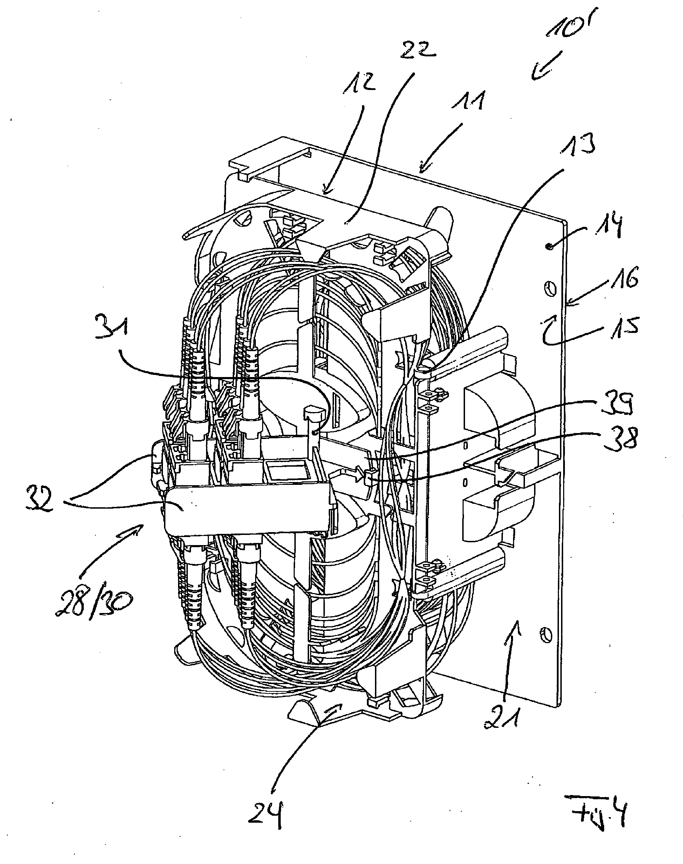

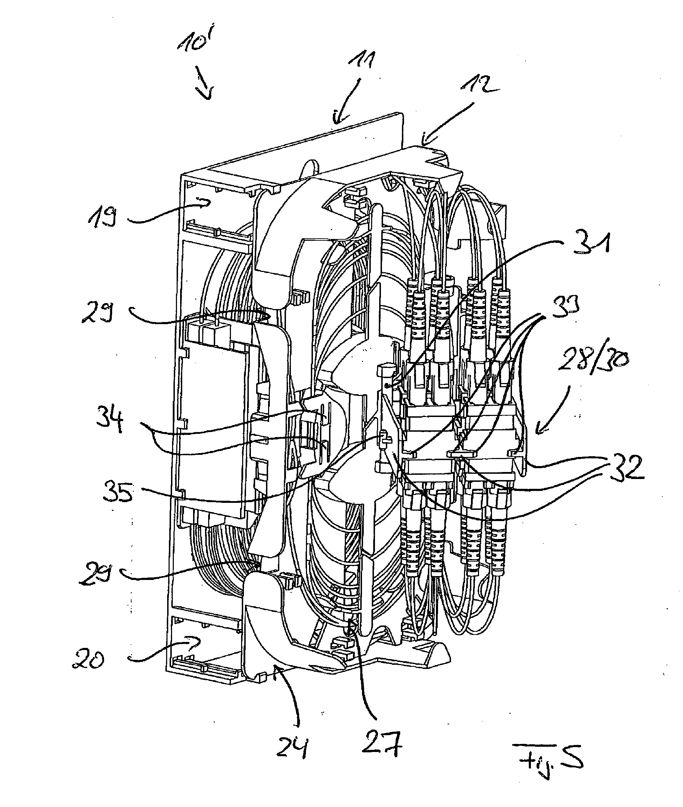

The optional patch area 28 comprises an adapter holder 30. The adapter holder 30 is stacked above the overlength handling area 27. The adapter holder 30 is pivotable relative to the basic body 22 of the tray 12 by a hinge 31 for providing access to the basic body 22 of the tray 12, namely to the overlength handling area 27 at the front side 24 of the same. The adapter holder 30 can be pivoted around a pivoting axis provided by the hinge 31 relative to the basic body 22 of the tray 12 by approximately 45°. The adapter holder 30 can be pivoted relative to the basic body 22 of the tray 12 between an installation position (see Figures 4, 5) and an operation position (see Figures 1, 2, 3, 5, 7). In the installation position of the adapter holder 30, the same provides access to the overlength handling area 27 at the front side 24 of the tray 12.

The adapter holder 30 comprises holding legs 32 running in parallel to each other, wherein adapters can be stacked and clamped within the holding legs 32. Between each two holding legs 32 of the adapter holder 30, the adapter holder 30 can receive one stack of adapters. In the shown embodiments the adapter holder 30 is adapted to receive at least two stacks of adapters. When inserting adapters between two adjacent holding legs 32, the holding legs become elastically deformed and protrusions 33 of the holding legs 32 become inserted into recesses of the adapters thereby holding and clamping the adapters between the respective holding legs 32.

The relative position of adapter holder 30 relative to the tray 12 can be secured by securing means. In the embodiment of Figures 1 and 2 as well as in the embodiment of Figures 3 to 7, the adapter holder 30 can be secured in its operation position by fixing hooks 34 (see Figure 5) of the basic body 22 of the tray 12 snapping over a protrusion 35 assigned to one of the holding legs 32 of the adapter holder 30 when the same is pivoted into its operation position.

In the embodiment of Figures 1 and 2, the adapter holder 30 can be secured in its installation position by a fixing hook 36 (see Figure 1) of the basic body 22 of the tray 12 snapping into a fixing window 37 assigned to of the adapter holder 30 when the same is pivoted into its installation position. In the embodiment of Figures 3 to 7, the adapter holder 30 can be secured in its installation position by a fixing hook 38 (see Figures 3, 4) of the basic body 22 of the tray 12 snapping over a protrusion 39 of the adapter holder 30 when the same is pivoted into its installation position.

The above described fiber optic management units 10 and 10' allow a unique handling of optical fibers, splices and splitters. The fiber optic management units 10, 10' provide a modular and scalable solution. The fiber optic management units 10, 10' support functional separation by the different functional areas 17, 18, 19, 201, 21 of the base 11 and the functional areas 25, 26, 27 of the tray 12.

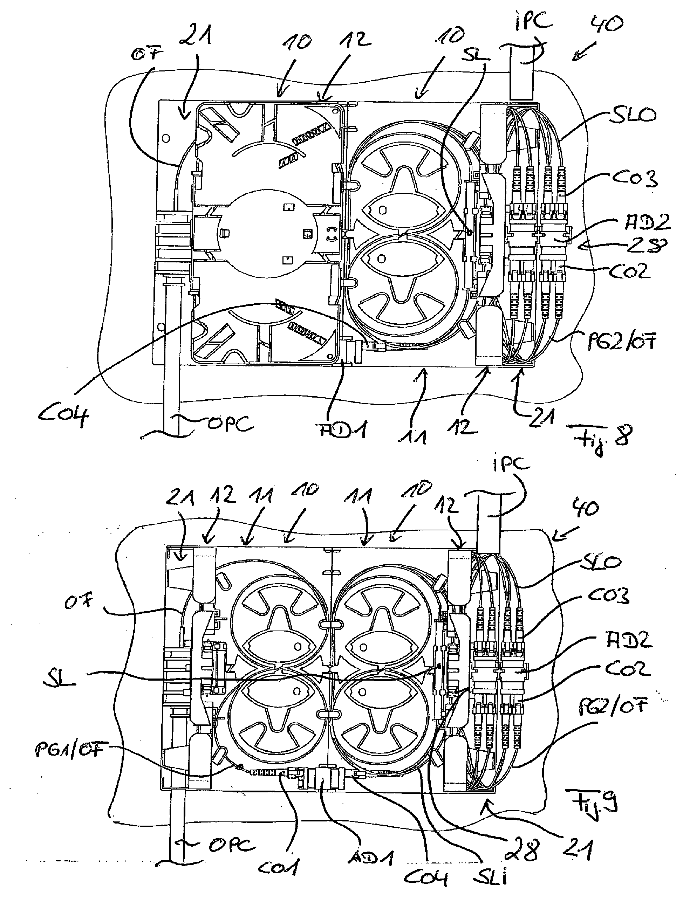

Figure 8 and 9 show a fiber optic distribution device 40 comprising two fiber optic management units 10. A first fiber optic management unit 10, namely in Figures 8 and 9 the fiber optic management unit 10 shown on the left hand side, serves as an outdoor unit. A second fiber optic management unit 10, namely in Figures 8 and 9 the fiber optic management unit 10 shown on the right hand side, serves as an indoor unit.

The term outdoor unit and the term indoor unit should be understood in a way that outdoor unit serves for the handling of optical fibers, e.g. of field fibers or feeder fibers, of an outdoor cable and that indoor unit serves for the handling of optical fibers, e.g. of riser fibers, of an indoor cable. Both units are installed in a fiber optic distribution device inside of buildings. However, it is also possible to use the fiber optic management unit of the present application in a fiber optic distribution device outside of buildings.

An outdoor optical cable OPC comprising several optical fibers OF is guided to the cable handling area 21 of the base 11 of the outdoor fiber optic management unit 10. Overlength of optical fibers OF running in the outdoor optical cable OPC, overlength of optical fibers OF running in pigtails PG1 and splices between the optical fibers OF running in the outdoor optical cable OPC and the optical fibers OF running in the pigtails PG1 are handled within the outdoor fiber optic management unit 10.

Overlength of the optical fibers OF running in the outdoor cable OPC is handled within the overlength handling area 26 on the back side 23 of the tray 12 or in the overlength handling area 27 on the front side 24 of the tray 12 of the outdoor fiber optic management unit 10. Overlength of the optical fibers OF running in the pigtails PG1 which are spliced to the fibers OF running in the outdoor cable OPC is handled within the overlength handling area 17 of the base 11 of the indoor fiber optic management unit 10.

Splices between the optical fibers OF running in the outdoor cable OPC and the optical fibers OF running in the pigtails PG1 are handled in the splice protector handling area 25 on the back side 23 of the tray 12 of the outdoor fiber optic management unit 10.

Connectors CO1 of the pigtails PG1 of the outdoor fiber optic management unit 10 are guided to and plugged into adapters AD1 handled in one of the patch areas 19 or 20 of the base 11 of the outdoor fiber optic management unit 10.

An indoor cable IPC comprising several optical fibers OF is guided to the cable handling area 21 of the base 11 of the indoor fiber optic management unit 10. Overlength of optical fibers OF running in an indoor cable IPC, overlength of optical fibers OF running in pigtails PG2 and splitters SP connected between the pigtails PG1 of the outdoor fiber optic management unit 10 and the pigtails PG2 of the indoor fiber optic management unit 10 are handled within the indoor fiber optic management unit 10.

Overlength of the optical fibers OF running in the pigtails PG2 which are spliced to the fibers OF running in the indoor optical cable IPC is handled within the overlength handling area 27 provided at the front side 24 of the tray 12 of the indoor fiber optic management unit 10. Overlength of the optical fibers OF running in the indoor optical cable IPC is handled within the overlength handling area 26 of the tray 12 provided proximate the splice protector handling area 25 at the back side 23 of the tray 12.

Splices SP between the optical fibers OF running in the indoor optical cable IPC and the optical fibers OF running in the pigtails PG2 are handled in the splice protector handling area 25 at the back side 23 of the tray 12 of the indoor fiber optic management unit 10. Connectors CO2 of the pigtails PG2 of the indoor unit are guided to the adapters AD2 handled in the patch area 28 of the tray 12 of the indoor fiber optic management unit 10.

Splitters SL being connected between the pigtails PG1 of the outdoor unit 10 and the pigtails PG2 of the indoor unit 10 are handled within the splice and/or splitter handling area 28 of the base 11 of the indoor fiber optic management unit 10. Connectors CO3 of output legs SLO of the splitters SL are guided to and plugged in the adapters AD2 handled in the patch area 28 of the tray 12 of the indoor fiber optic management unit 10. Connectors C04 of input legs SLI of the splitters SL are guided to and plugged in the adapters AD1 handled in the patch area 19, 20 of the base 11 of the outdoor fiber optic management unit 10.

The fiber optic distribution device 40 supports functional or labor related separation. In case of different teams working with the system, the outdoor unit 10 is dedicated to an outdoor team bringing fibers of the outdoor cable OPC to a building, while the indoor unit 10 is dedicated to an indoor team distributing the fibers within the building.

The outdoor team installs the outdoor unit 10 in a housing (not shown) of the fiber optic distribution device 40 and splices the filed fibers OF running in the outdoor cable OPC to fibers OF running in the pigtails PG1. The connectors CO1 of these pigtails PG1 are guided to and plugged in the adapters AD1.

The indoor team installs independently from the outdoor team the indoor unit 10 in housing (not shown) of the fiber optic distribution device 40 and splices the customer fibers OF running in the indoor cable IPC to fibers OF running in the pigtails PG2. The connectors CO2 of these pigtails PG2 are guided to and plugged in the adapters AD2. Afterwards the indoor team installs the splitters SL, wherein the connectors CO3 of output legs SLO of the splitters SL are guided to and plugged in the adapters AD2, and wherein the connectors C04 of input legs SLI of the splitters SL are guided to and plugged in the adapters AD1.

Such a fiber optic distribution device 40 physically separates fibers stored in the outdoor unit 10 from fibers stored in the indoor unit 10, while the only common point is the or each adapter AD1 used to connect the splitters SL to field fibers running in the outdoor cable OPC.

The fiber optic management units 10, 10' can be used separately or can be connected to form a fiber optic distribution device 40.

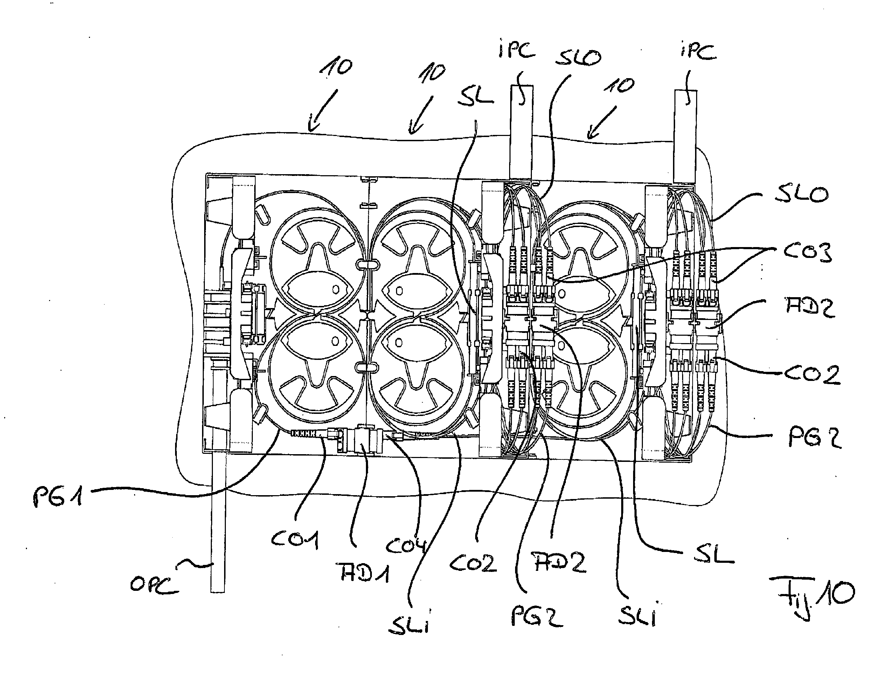

The fiber optic distribution device 40 shown in Figures 8 and 9 comprises two fiber optic management units 10 connected side by side. Figure 10 shows a fiber optic distribution device 40 comprising three fiber optic management units 10 connected side by side, one of the same serving as outdoor unit and two of the same serving as indoor units. The fiber optic management unit 10 shown on the left hand side of Figure 10 serves as outdoor unit. The other two fiber optic management units 10 of Figure 10 serve as indoor units. Each of the indoor units 10 handles fibers running in a respective indoor optical cable IPC and connects the same to field fibers running in the outdoor cable OPC. It is possible to have more than two indoor units in a fiber optic distribution device 40.

The outdoor unit 10 and an indoor unit 10 being proximate to the outdoor unit 10 are positioned side by side in such a way that the trays 12 of the same are pivotable in opposite directions in order to provide access to the bases 11 of the respective fiber optic management unit 10.

As can be best seen in Figures 9 and 10, the tray 12 of left hand outdoor unit 10 is pivotable to the left to provide access to the bases 11 of the outdoor unit, and the tray 12 of the or each indoor unit 10 is pivotable to the right to provide access to the bases 11 of the respective indoor unit.

As also shown in Figure 9 and 10, the adapters AD1 receiving the connectors CO1 and C04 are accommodated in a patch area 19, 20 of the base 11 of the outdoor unit and in an adjacent patch area 19, 20 of the base 11 of the proximate indoor unit 10.

### List of reference numerals

- 10, 10': fiber optic management unit
- 11: base
- 12: tray
- 13: hinge
- 14: basic body
- 15: front side
- 16: back side
- 17: overlength handling area
- 18: splice and/or splitter handling area
- 19: patch area
- 20: patch area
- 21: cable handling area
- 22: basic body
- 23: front side
- 24: back side
- 25: splice protector handling area
- 26: overlength handling area
- 27: overlength handling area
- 28: patch area
- 29: trough opening
- 30: adapter holder
- 31: hinge
- 32: holding leg
- 33: protrusion
- 34: fixing hook
- 35: protrusion
- 36: fixing hook
- 37: fixing window
- 38: fixing hook
- 39: protrusion
- 40: fiber optic distribution device
- AD1: adapter
- AD2: adapter
- CO1: connector
- CO2: connector
- CO3: connector
- CO4: connector
- IPC: indoor cable
- OPC: outdoor cable
- OF: optical fiber
- PG1: pigtail
- PG2: pigtail
- SL: splitter
- SLO: output leg of splitter
- SLI: input leg of splitter
- SP: splice

## Claims

1. A fiber optic management unit (10, 10') for a fiber optic distribution device, the fiber optic management unit comprises a base (11) through which the same is mountable to a housing of the fiber optic distribution device and a tray (12) pivotably attached to the base (11) by a hinge (13), wherein
the base (11) comprises a basic body (14), the basic body (14) of the base (11) having a front side (15) and a back side (16), wherein the front side (15) of the basic body (14) provides different functional areas, namely an overlength handling area (17) for handling overlength of optical fibers, a splice and/or splitter handling area (18) for handling splices and/or splitters, at least one patch area (19, 20) for handling fiber optic adapters and/or fiber optic connectors and a cable handling area (21) for handling a fiber optic cable;
the tray (12) comprises a basic body (22), the basic body (22) of the tray (12) having a front side (24) and a back side (23), wherein the back side (23) provides a splice protector handling area (25) for handling splice protectors, wherein the front side (24) provides an overlength handling area (27) for handling overlength of optical fibers, and wherein the basic body (22) of the tray (12) comprises at least one through opening (29) for guiding optical fibers from the front side (24) to the back side (23) of the basic body of the tray (12).

2. The fiber optic management unit of claim 1, **characterized in that** the overlength handling area (17) and the splice and/or splitter handling area (18) and the or each patch area (19, 20) of the base (11) are positioned on a first side of the hinge (13), and that the cable handling area (21) is positioned on a second side of the hinge (13).

3. The fiber optic management unit of claim 2, **characterized in that** the splice and/or splitter handling area (18) is positioned between the hinge (13) and the overlength handling area (17), that a first patch area (18) is positioned on a first side of the overlength handling area (17), and that a second patch area (20) is positioned on a second side of the overlength handling area (17).

4. The fiber optic management unit of claim 2, **characterized in that** the overlength handling area (17) is positioned between the hinge (13) and the splice and/or splitter handling area (18), that a first patch area (19) is positioned on a first side of the overlength handling area (17), and that a second patch area (20) is positioned on a second side of the overlength handling area (17).

5. The fiber optic management unit of one of claims 1-4, **characterized in that** the front side (24) of the basic body (22) of the tray (12) further provides a patch area (28) for handling fiber optic adapters and/or fiber optic connectors, wherein the patch area (28) comprises an adapter holder (30) being stacked above the overlength handling area (27).

6. The fiber optic management unit of claim 5, **characterized in that** the adapter holder (30) of tray (12) is pivotable relative to the basic body (22) of the tray (12) for providing access to the basic body (22) of the tray (12), namely to the overlength handling area (27) of the same.

7. The fiber optic management unit of claim 5 or 6, **characterized in that** adapter holder (30) comprises holding legs (32) running in parallel to each other, wherein adapters can be stacked and clamped within the holding legs (32).

8. The fiber optic management unit of one of claims 5-7, **characterized in that** adapter holder (30) is adapted to receive at least two stacks of adapters.

9. A fiber optic distribution device comprising at least two fiber optic management units of claims 1-8, wherein
a first fiber optic management unit (10) serves as an outdoor unit, wherein overlength of optical fibers running in an outdoor cable (OPC), overlength of optical fibers running in pigtails (PG1) and splices between the optical fibers of the outdoor cable (OPC) and the optical fibers of the pigtails (PG1) are handled within the first fiber optic management unit;
at least one second fiber optic management unit (10) serves as an indoor unit, wherein overlength of optical fibers running in an indoor cable (IPC), overlength of optical fibers running in pigtails (PG2) and splitters (SL) connected between the pigtails of the outdoor unit and the pigtails of the indoor unit are handled within the or each second fiber optic management unit.

10. The fiber optic distribution device of claim 9, **characterized in that**
overlength of the optical fibers running in the outdoor cable (OPC) is handled within an overlength handling area (26, 27) of the tray (12) of the first fiber optic management unit (10),
overlength of the optical fibers running in the pigtails (PG1) which are spliced to the fibers of the outdoor cable (OPC) is handled within the overlength handling area (17) of the base (11) of the first fiber optic management unit (10),
splices between the optical fibers running in the outdoor cable (OPC) and the optical fibers running in the pigtails (PG1) are handled in the splice protector handling area (25) of the tray (12) of the first fiber optic management unit (10),
connectors (CO1) of the pigtails (PG1) of the outdoor unit are guided to and plugged in adapters (AD1) handled in the patch area (19, 20) of the base (11) of the first fiber optic management unit (10).

11. The fiber optic distribution device of claim 9 or 10, **characterized in that**
overlength of the optical fibers running in the pigtails (PG2) which are spliced to the fibers of the indoor cable (IPC) is handled within an overlength handling area (27) of the tray (12) of the or each second fiber optic management unit (10),
splices between the optical fibers of the indoor cable (IPC) and the optical fibers of the pigtails (PG2) are handled in the splice protector handling area (25) of the tray (12) of the or each second fiber optic management unit (10),
connectors (CO2) of the pigtails (PG2) of the indoor unit are guided to the adapters (AD2) handled in the patch area (28) of the tray (12) of the or each second fiber optic management unit (10).

12. The fiber optic distribution device of claim 11, **characterized in that** overlength of the optical fibers running in the indoor cable (IPC) is handled within an overlength handling area (26) of the tray (12) provided proximate the splice protector handling area (15) at the back side (23) of the tray (12).

13. The fiber optic distribution device of one of claims 9 to 12, **characterized in that**
splitters (SL) being connected between the pigtails (PG1) of the outdoor unit and the pigtails (PG2) of the indoor unit are handled within the splice and/or splitter handling area (18) of the base (11) of the or each second fiber optic management unit (10),
connectors (CO3) of output legs (SLO) of the splitters (SL) are guided to and plugged in the adapters (AD2) handled in the patch area (28) of the tray (12) of the or each second fiber optic management unit (10),
connectors (C04) of input legs (SLI) of the splitters (SL) are guided to and plugged in the adapters (AD1) handled in the patch area (28) of the base (11) of the first fiber optic management unit (10).

14. The fiber optic distribution device of one of claims 9 to 13, **characterized by** one first fiber optic management unit (10) serving as an outdoor unit and at least one second fiber optic management unit (10) serving as an indoor unit, whereby the outdoor unit and the or each indoor unit are arranged side by side providing a row in such a way that the or each indoor unit is positioned on the same side of the outdoor unit.

15. The fiber optic distribution device of claim 14, **characterized in that** the outdoor unit and an indoor unit being proximate to the outdoor unit are positioned side by side in such a way that the trays (12) of the same are pivotable in opposite directions in order to provide access to the bases (11) of the same.

## Patentansprüche

1. Glasfaserverwaltungseinheit (10, 10') für eine Glasfaserverteilungsvorrichtung, wobei die Glasfaserverwaltungseinheit eine Basis (11), durch die dieselbe an einem Gehäuse der Glasfaserverteilungsvorrichtung montierbar ist, und eine Kassette (12), die durch ein Scharnier (13) schwenkbar an der Basis (11) angebracht ist, umfasst, wobei
die Basis (11) einen Grundkörper (14) umfasst, wobei der Grundkörper (14) der Basis (11) eine Frontseite (15) und eine Rückseite (16) aufweist, wobei die Frontseite (15) des Grundkörpers (14) verschiedene funktionale Bereiche, nämlich einen Überlängen-Handhabungsbereich (17) zum Handhaben von Überlängen von Glasfasern, einen Spleiß- und/oder Splitter-Handhabungsbereich (18) zum Handhaben von Spleißen und/oder Splittern, mindestens einen Patchbereich (19, 20) zum Handhaben von Glasfaseradaptern und/oder Glasfaserverbindern und einen Kabel-Handhabungsbereich (21) zum Handhaben von Glasfaserkabeln, bereitstellt;
die Kassette (12) einen Grundkörper (22) umfasst, wobei der Grundkörper (22) der Kassette (12) eine Frontseite (24) und eine Rückseite (23) aufweist, wobei die Rückseite (23) einen Spleiß-Protektor-Handhabungsbereich (25) zum Handhaben von Spleiß-Protektoren bereitstellt, wobei die Frontseite (24) einen Überlängen-Handhabungsbereich (27) zum Handhaben von Überlängen von Glasfasern bereitstellt und wobei der Grundkörper (22) der Kassette (12) mindestens eine Durchgangsöffnung (29) zum Führen von Glasfasern von der Frontseite (24) zur Rückseite (23) des Grundkörpers der Kassette (12) umfasst.

2. Glasfaserverwaltungseinheit nach Anspruch 1, **dadurch gekennzeichnet, dass** der Überlängen-Handhabungsbereich (17) und der Spleiß- und/oder Splitter-Handhabungsbereich (18) und der oder jeder Patchbereich (19, 20) der Basis (11) auf einer ersten Seite des Scharniers (13) positioniert sind und dass der Kabel-Handhabungsbereich (21) auf einer zweiten Seite des Scharniers (13) positioniert ist.

3. Glasfaserverwaltungseinheit nach Anspruch 2, **dadurch gekennzeichnet, dass** der Spleiß- und/oder Splitter-Handhabungsbereich (18) zwischen dem Scharnier (13) und dem Überlängen-Handhabungsbereich (17) positioniert ist, dass ein erster Patchbereich (19) auf einer ersten Seite des Überlängen-Handhabungsbereichs (17) positioniert ist und dass ein zweiter Patchbereich (20) auf einer zweiten Seite des Überlängen-Handhabungsbereichs (17) positioniert ist.

4. Glasfaserverwaltungseinheit nach Anspruch 2, **dadurch gekennzeichnet, dass** der Überlängen-Handhabungsbereich (17) zwischen dem Scharnier (13) und dem Spleiß- und/oder Splitter-Handhabungsbereich (18) positioniert ist, dass ein erster Patchbereich (19) auf einer ersten Seite des Überlängen-Handhabungsbereichs (17) positioniert ist und dass ein zweiter Patchbereich (20) auf einer zweiten Seite des Überlängen-Handhabungsbereichs (17) positioniert ist.

5. Glasfaserverwaltungseinheit nach einem der Ansprüche 1-4, **dadurch gekennzeichnet, dass** die Frontseite (24) des Grundkörpers (22) der Kassette (12) weiterhin einen Patchbereich (28) zum Handhaben von Glasfaseradaptern und/oder Glasfaserverbindern bereitstellt, wobei der Patchbereich (28) einen oberhalb des Überlängen-Handhabungsbereichs (27) gestapelten Adapterhalter (30) umfasst.

6. Glasfaserverwaltungseinheit nach Anspruch 5, **dadurch gekennzeichnet, dass** der Adapterhalter (30) der Kassette (12) relativ zum Grundkörper (22) der Kassette (12) schwenkbar ist, um Zugang zum Grundkörper (22) der Kassette (12) bereitzustellen, nämlich zum Überlängen-Handhabungsbereich (27) desselben.

7. Glasfaserverwaltungseinheit nach Anspruch 5 oder 6, **dadurch gekennzeichnet, dass** der Adapterhalter (30) zueinander parallel verlaufende Haltebeine (32) umfasst, wobei Adapter innerhalb der Haltebeine (32) gestapelt und geklemmt werden können.

8. Glasfaserverwaltungseinheit nach einem der Ansprüche 5-7, **dadurch gekennzeichnet, dass** der Adapterhalter (30) ausgelegt ist, mindestens zwei Stapel von Adaptern aufzunehmen.

9. Glasfaserverteilungsvorrichtung, die mindestens zwei Glasfaserverwaltungseinheiten nach Ansprüchen 1-8 umfasst, wobei
eine erste Glasfaserverwaltungseinheit (10) als eine Ausseneinheit dient, wobei Überlängen von Glasfasern, die in einem Aussenkabel (OPC) verlaufen, Überlängen von Glasfasern, die in Pigtails (PG1) verlaufen, und Spleiße zwischen den Glasfasern des Aussenkabels (OPC) und den Glasfasern der Pigtails (PG1) in der ersten Glasfaserverwaltungseinheit gehandhabt werden;
mindestens eine zweite Glasfaserverwaltungseinheit (10) als eine Inneneinheit dient, wobei Überlängen von Glasfasern, die in einem Innenkabel (IPC) verlaufen, Überlängen von Glasfasern, die in Pigtails (PG2) verlaufen, und Splitter (SL), die zwischen die Pigtails der Ausseneinheit und die Pigtails der Inneneinheit geschaltet sind, in der oder jeder zweiten Glasfaserverwaltungseinheit gehandhabt werden.

10. Glasfaserverteilungsvorrichtung nach Anspruch 9, **dadurch gekennzeichnet, dass**
Überlängen von Glasfasern, die in dem Aussenkabel (OPC) verlaufen, in einem Überlängen-Handhabungsbereich (26, 27) der Kassette (12) der ersten Glasfaserverwaltungseinheit (10) gehandhabt werden,
Überlängen der Glasfasern, die in den Pigtails (PG1) verlaufen, die mit den Glasfasern des Aussenkabels (OPC) verspleißt sind, in dem Überlängen-Handhabungsbereich (17) der Basis (11) der ersten Glasfaserverwaltungseinheit (10) gehandhabt werden,
Spleiße zwischen den Glasfasern, die in dem Aussenkabel (OPC) verlaufen, und den Glasfasern, die in den Pigtails (PG1) verlaufen, in dem Spleiß-Protektor-Handhabungsbereich (25) der Kassette (12) der ersten Glasfaserverwaltungseinheit (10) gehandhabt werden,
Verbinder (CO1) der Pigtails (PG1) der Ausseneinheit zu Adaptern (AD1) geführt und in diese eingesteckt werden, die im Patchbereich (19, 20) der Basis (11) der ersten Glasfaserverwaltungseinheit (10) gehandhabt werden.

11. Glasfaserverteilungsvorrichtung nach Anspruch 9 oder 10, **dadurch gekennzeichnet, dass**
Überlängen der Glasfasern, die in den Pigtails (PG2) verlaufen, die mit den Glasfasern des Innenkabels (IPC) verspleißt sind, in einem Überlängen-Handhabungsbereich (27) der Kassette (12) der oder jeder zweiten Glasfaserverwaltungseinheit (10) gehandhabt werden,
Spleiße zwischen den Glasfasern des Innenkabels (IPC) und den Glasfasern der Pigtails (PG2) in dem Spleiß-Protektor-Handhabungsbereich (25) der Kassette (12) der oder jeder zweiten Glasfaserverwaltungseinheit (10) gehandhabt werden,
Verbinder (CO2) der Pigtails (PG2) der Inneneinheit zu den Adaptern (AD2) geführt werden, die im Patchbereich (28) der Kassette (12) der oder jeder zweiten Glasfaserverwaltungseinheit (10) gehandhabt werden.

12. Glasfaserverteilungsvorrichtung nach Anspruch 11, **dadurch gekennzeichnet, dass** Überlängen von Glasfasern, die in dem Innenkabel (IPC) verlaufen, in einem Überlängen-Handhabungsbereich (26) der Kassette (12), der nahe am Spleiß-Protektor-Handhabungsbereich (15) auf der Rückseite (23) der Kassette (12) bereitgestellt wird, gehandhabt werden.

13. Glasfaserverteilungsvorrichtung nach einem der Ansprüche 9 bis 12, **dadurch gekennzeichnet, dass**
Splitter (SL), die zwischen die Pigtails (PG1) der Ausseneinheit und die Pigtails (PG2) der Inneneinheit geschaltet sind, in dem Spleiß- und/oder Splitter-Handhabungsbereich (18) der Basis (11) der oder jeder zweiten Glasfaserverwaltungseinheit (10) gehandhabt werden,
Verbinder (C03) der Ausgangszweige (SLO) der Splitter (SL) zu den Adaptern (AD2) geführt und in diese eingesteckt werden, die im Patchbereich (28) der Kassette (12) der oder jeder zweiten Glasfaserverwaltungseinheit (10) gehandhabt werden,
Verbinder (C04) der Eingangszweige (SLI) der Splitter (SL) zu den Adaptern (AD1) geführt und in diese eingesteckt werden, die im Patchbereich (28) der Basis (11) der ersten Glasfaserverwaltungseinheit (10) gehandhabt werden.

14. Glasfaserverteilungsvorrichtung nach einem der Ansprüche 9 bis 13, **dadurch gekennzeichnet, dass** eine erste Glasfaserverwaltungseinheit (10) als eine Ausseneinheit dient und mindestens eine zweite Glasfaserverwaltungseinheit (10) als eine Inneneinheit dient, wobei die Ausseneinheit und die oder jede Inneneinheit Seite an Seite angeordnet sind, dass sie derart eine Reihe bilden, dass die oder jede Inneneinheit auf derselben Seite der Ausseneinheit positioniert ist.

15. Glasfaserverteilungsvorrichtung nach Anspruch 14, **dadurch gekennzeichnet, dass** die Ausseneinheit und eine nahe an der Ausseneinheit gelegene Inneneinheit derart Seite an Seite positioniert sind, dass die Kassetten (12) derselben in entgegengesetzte Richtungen schwenkbar sind, um Zugang zu den Basen (11) derselben bereitzustellen.

## Revendications

1. Unité de gestion de fibres optiques (10, 10') pour un dispositif de distribution de fibres optiques, l'unité de gestion de fibres optiques comprenant un socle (11) permettant de la monter sur un boîtier du dispositif de distribution de fibres optiques et un plateau (12) fixé pivotant au socle (11) par une charnière (13),
lequel socle (11) comprend un corps de base (14), le corps de base (14) du socle (11) présentant une face avant (15) et une face arrière (16), laquelle face avant (15) du corps de base (14) offre différentes zones fonctionnelles, à savoir une zone de prise en charge de surlongueur (17) servant à prendre en charge une surlongueur de fibres optiques, une zone de prise en charge d'épissures et/ou de séparateurs (18) servant à prendre en charge des épissures et/ou des séparateurs, au moins une zone de raccordement (19, 20) servant à prendre en charge des adaptateurs de fibres optiques et/ou des connecteurs de fibres optiques et une zone de prise en charge de câble (21) servant à prendre en charge un câble à fibres optiques ;
lequel plateau (12) comprend un corps de base (22), le corps de base (22) du plateau (12) présentant une face avant (24) et une face arrière (23), laquelle face arrière (23) offre une zone de prise en charge de protecteurs d'épissures (25) servant à prendre en charge des protecteurs d'épissures, laquelle face avant (24) offre une zone de prise en charge de surlongueur (27) servant à prendre en charge une surlongueur de fibres optiques, et lequel corps de base (22) du plateau (12) comprend au moins une ouverture traversante (29) servant à guider des fibres optiques depuis la face avant (24) jusqu'à la face arrière (23) du corps de base du plateau (12).

2. Unité de gestion de fibres optiques selon la revendication 1, **caractérisée en ce que** la zone de prise en charge de surlongueur (17) et la zone de prise en charge d'épissures et/ou de séparateurs (18) et la ou chaque zone de raccordement (19, 20) du socle (11) sont agencées d'un premier côté de la charnière (13), et **en ce que** la zone de prise en charge de câble (21) est agencée d'un deuxième côté de la charnière (13).

3. Unité de gestion de fibres optiques selon la revendication 2, **caractérisée en ce que** la zone de prise en charge d'épissures et/ou de séparateurs (18) est agencée entre la charnière (13) et la zone de prise en charge de surlongueur (17), **en ce qu'**une première zone de raccordement (18) est agencée d'un premier côté de la zone de prise en charge de surlongueur (17) et **en ce qu'**une deuxième zone de raccordement (20) est agencée d'un deuxième côté de la zone de prise en charge de surlongueur (17).

4. Unité de gestion de fibres optiques selon la revendication 2, **caractérisée en ce que** la zone de prise en charge de surlongueur (17) est agencée entre la charnière (13) et la zone de prise en charge d'épissures et/ou de séparateurs (18), **en ce qu'**une première zone de raccordement (19) est agencée d'un premier côté de la zone de prise en charge de surlongueur (17) et **en ce qu'**une deuxième zone de raccordement (20) est agencée d'un deuxième côté de la zone de prise en charge de surlongueur (17).

5. Unité de gestion de fibres optiques selon l'une des revendications 1 à 4, **caractérisée en ce que** la face avant (24) du corps de base (22) du plateau (12) offre en outre une zone de raccordement (28) servant à prendre en charge des adaptateurs de fibres optiques et/ou des connecteurs de fibres optiques, laquelle zone de raccordement (28) comprend un porte-adaptateurs (30) empilé au-dessus de la zone de prise en charge de surlongueur (27).

6. Unité de gestion de fibres optiques selon la revendication 5, **caractérisée en ce que** le porte-adaptateurs (30) du plateau (12) est pivotant par rapport au corps de base (22) du plateau (12) pour donner accès au corps de base (22) du plateau (12), à savoir à sa zone de prise en charge de surlongueur (27).

7. Unité de gestion de fibres optiques selon la revendication 5 ou 6, **caractérisée en ce que** le porte-adaptateurs (30) comprend des pattes de retenue (32) s'étendant parallèlement les unes aux autres, dans lesquelles des adaptateurs peuvent être empilés et bloqués.

8. Unité de gestion de fibres optiques selon l'une des revendications 5 à 7, **caractérisée en ce que** le porte-adaptateurs (30) est adapté à recevoir au moins deux empilements d'adaptateurs.

9. Dispositif de distribution de fibres optiques comprenant au moins deux unités de gestion de fibres optiques selon les revendications 1 à 8, dans lequel
une première unité de gestion de fibres optiques (10) joue le rôle d'unité d'extérieur, dans laquelle sont prises en charge une surlongueur de fibres optiques s'étendant dans un câble d'extérieur (OPC), une surlongueur de fibres optiques s'étendant dans des queues de cochon (PG1) et des épissures entre les fibres optiques du câble d'extérieur (OPC) et les fibres optiques des queues de cochon (PG1) ;
au moins une deuxième unité de gestion de fibres optiques (10) joue le rôle d'unité d'intérieur, dans laquelle ou chacune desquelles sont pris en charge une surlongueur de fibres optiques s'étendant dans un câble d'intérieur (IPC), une surlongueur de fibres optiques s'étendant dans des queues de cochon (PG2) et des séparateurs (SL) connectés entre les queues de cochon de l'unité d'extérieur et les queues de cochon de l'unité d'intérieur.

10. Dispositif de distribution de fibres optiques selon la revendication 9, **caractérisé en ce que**
une surlongueur des fibres optiques s'étendant dans le câble d'extérieur (OPC) est prise en charge dans une zone de prise en charge de surlongueur (26, 27) du plateau (12) de la première unité de gestion de fibres optiques (10),
une surlongueur des fibres optiques s'étendant dans les queues de cochon (PG1) épissées aux fibres du câble d'extérieur (OPC) est prise en charge dans la zone de prise en charge de surlongueur (17) du socle (11) de la première unité de gestion de fibres optiques (10),
des épissures entre les fibres optiques s'étendant dans le câble d'extérieur (OPC) et les fibres optiques s'étendant dans les queues de cochon (PG1) sont prises en charge dans la zone de prise en charge de protecteurs d'épissures (25) du plateau (12) de la première unité de gestion de fibres optiques (10),
des connecteurs (CO1) des queues de cochon (PG1) de l'unité d'extérieur sont guidés jusqu'à des adaptateurs (AD1) pris en charge dans la zone de raccordement (19, 20) du socle (11) de la première unité de gestion de fibres optiques (10), et y sont enfichés.

11. Dispositif de distribution de fibres optiques selon la revendication 9 ou 10, **caractérisé en ce que**
une surlongueur des fibres optiques s'étendant dans les queues de cochon (PG2) épissées aux fibres du câble d'intérieur (IPC) est prise en charge dans une zone de prise en charge de surlongueur (27) du plateau (12) de la ou chaque deuxième unité de gestion de fibres optiques (10),
des épissures entre les fibres optiques du câble d'intérieur (IPC) et les fibres optiques des queues de cochon (PG2) sont prises en charge dans la zone de prise en charge de protecteurs d'épissures (25) du plateau (12) de la ou chaque deuxième unité de gestion de fibres optiques (10),
des connecteurs (CO2) des queues de cochon (PG2) de l'unité d'intérieur sont guidés jusqu'aux adaptateurs (AD2) pris en charge dans la zone de raccordement (28) du plateau (12) de la ou chaque deuxième unité de gestion de fibres optiques (10).

12. Dispositif de distribution de fibres optiques selon la revendication 11, **caractérisé en ce qu'**une surlongueur des fibres optiques s'étendant dans le câble d'intérieur (IPC) est prise en charge dans une zone de prise en charge de surlongueur (26) du plateau (12) située à proximité de la zone de prise en charge de protecteurs d'épissures (15) au niveau de la face arrière (23) du plateau (12).

13. Dispositif de distribution de fibres optiques selon l'une des revendications 9 à 12, **caractérisé en ce que**
des séparateurs (SL) connectés entre les queues de cochon (PG1) de l'unité d'extérieur et les queues de cochon (PG2) de l'unité d'intérieur sont prises en charge dans la zone de prise en charge d'épissures et/ou de séparateurs (18) du socle (11) de la ou chaque deuxième unité de gestion de fibres optiques (10),
des connecteurs (CO3) de tronçons de sortie (SLO) des séparateurs (SL) sont guidés jusqu'aux adaptateurs (AD2) pris en charge dans la zone de raccordement (28) du plateau (12) de la ou chaque deuxième unité de gestion de fibres optiques (10), et y sont enfichés,
des connecteurs (CO4) de tronçons d'entrée (SLI) des séparateurs (SL) sont guidés jusqu'aux adaptateurs (AD1) pris en charge dans la zone de raccordement (28) du socle (11) de la première unité de gestion de fibres optiques (10), et y sont enfichés.

14. Dispositif de distribution de fibres optiques selon l'une des revendications 9 à 13, **caractérisé par** une première unité de gestion de fibres optiques (10) jouant le rôle d'unité d'extérieur et au moins une deuxième unité de gestion de fibres optiques (10) jouant le rôle d'unité d'intérieur, l'unité d'extérieur et la ou chaque unité d'intérieur étant agencées côte à côte pour former une rangée de sorte que la ou chaque unité d'intérieur se situe du même côté de l'unité d'extérieur.

15. Dispositif de distribution de fibres optiques selon la revendication 14, **caractérisé en ce que** l'unité d'extérieur et une unité d'intérieur proche de l'unité d'extérieur sont placées côte à côte de sorte que leurs plateaux (12) respectifs soient pivotants dans des sens opposés pour donner accès à leurs socles (11) respectifs.
